# Europäisches Patentamt
# European Patent Office
# Office européen des brevets

(19)

(11) Veröffentlichungsnummer: **0 203 119**
**B1**

(12)

# EUROPÄISCHE PATENTSCHRIFT

(45) Veröffentlichungstag der Patentschrift:
**12.10.88**

(51) Int. Cl.⁴: **B 65 G 33/38**

(21) Anmeldenummer: **85905752.3**

(22) Anmeldetag: **26.11.85**

(86) Internationale Anmeldenummer:
**PCT/CH 85/00167**

(87) Internationale Veröffentlichungsnummer:
**WO 86/03180 (05.06.86 Gazette 86/12)**

(54) **VERWENDUNG EINER VORRICHTUNG ZUM FÖRDERN VON FLIESSFÄHIGEM MATERIAL.**

(30) Priorität: **26.11.84 CH 5624/84**

(43) Veröffentlichungstag der Anmeldung:
**03.12.86 Patentblatt 86/49**

(45) Bekanntmachung des Hinweises auf die Patenterteilung:
**12.10.88 Patentblatt 88/41**

(84) Benannte Vertragsstaaten:
**AT BE CH DE FR GB IT LI NL SE**

(56) Entgegenhaltungen:
**CH-A-591 326**
**DE-B-1 085 812**
**FR-A-1 434 276**
**GB-A-1 142 836**
**US-A-2 260 824**
**US-A-4 391 561**

(73) Patentinhaber: **Schweizerische Aluminium AG, CH-8212 Neuhausen am Rheinfall (CH)**

(72) Erfinder: **MERZ, Walter, Allmendboden 31, CH- 8700 Küsnacht (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

## Beschreibung

Die Erfindung bezieht sich auf die Verwendung einer Vorrichtung mit einem Förderrohr mit einer koaxial angeordneten Förderschnecke und Mittel zu deren Antrieb, als selbstdichtendes Eintragungsaggregat von fliessfähigem Fördergut in pulverförmiger, körniger, zerstückelter, granalienförmiger oder pastöser Form in einen Förderstrom mit gasförmigen oder flüssigen Treibmitteln.

Bei Schneckenförderern ist das fördernde Element eine Schraubenfläche aus Blech, Bandstahl oder aus Vollmaterial gearbeitet, die um ihre Achse gedreht wird und das Fördergut in einem Trog oder Rohr vorwärtsschiebt. Schneckenförderer sind beispielsweise im Taschenbuch für den Maschinenbau von "Dubbel" (1981), Seiten 1154 und 1155, beschrieben.

Konventionelle Schneckenförderer haben mehrere Nachteile:

- Das Rohr darf nicht vollständig gefüllt sein, sondern nur etwa zur Hälfte, sonst kommt es zu Verklemmungen. Dadurch wird die Förderleistung pro Querschnitt erheblich verringert. Weiter kann über den nur halb gefüllten Schneckenförderer keine Druckdifferenz eingestellt werden.
- Der Vorschub im Schneckenförderer kann nur mit einer Relativbewegung der Schneckenflügel zum Gut erfolgen.
- Wegen des geringen Abstands der Förderschnecke von der Rohrwand werden Körner des Förderguts zerstört.
- Das Fördergut wird dauernd überwälzt.
- Der Schneckenförderer kann nur mit einer Dosiervorrichtung gespeist werden, weil er nur halbvoll sein darf.

Die DE-PS-953 956 beschreibt eine Förderschnecke zum Fördern von losem Gut in einer entgegengesetzten Flüssigkeitsströmung. Die drehbar und längs verschiebbar gelagerte Förderschnecke wird vor - und rückwärts verschoben. Während ihrer Rückwärtsverschiebung wird sie im Sinne eines Vorschubes des Fördergutes gedreht. Die angestrebte möglichst gute Durchmischung des Fördergutes und der in Gegenrichtung strömenden Flüssigkeit wird erreicht, indem die Schneckenflügel unterbrochen sind, im Gutstrom Lager angeordnet werden und der Trog mit der Förderschnecke nicht vollständig gefüllt ist.

In der US-PS-2 260 824 wird für eine Heizungsanlage eine Dosiervorrichtung mit Förderschnecke beschrieben, die drehbar und längs verschiebbar gelagert ist und bei der Rückholbewegung zwangsweise gedreht wird.

Ausgehend von diesem Stand der Technik hat sich der Erfinder die Aufgabe gestellt, bei Verwendung einer Vorrichtung vom Typ des vor- und rückwärts verschiebbaren, bei der Rückholbewegung zwangsweise gedrehten Schneckenförderers zum Transport von fliessfähigem Material eine hohe Förderleistung pro Querschnitt zu erreichen, ohne dass ein Dosiergerät gebraucht und dass beim Anlegen eines gasförmigen oder flüssigen Treibmittels über den Bereich der Förderschnecke eine Druckdifferenz erzeugt wird.

Die Aufgabe wird erfindungsgemäss durch die Verwendung einer Vorrichtung gelöst, wie sie sich nach dem Wortlaut des Anspruchs 1 sowie vorteilhaft nach dem Wortlaut der Ansprüche 2 bis 7 auszeichnet.

Bei der erfindungsgemäss verwendeten Förderschnecke wird eine sehr dichte Materialsäule gebildet, welche über die ganze Länge der Förderschnecke selbstdichtend ist und auch beim Verschieben im Förderrohr nicht aufgelockert wird. Der Gegendruck an der Austrittsöffnung liegt meist bei 6 - 8 bar.

Die Vorrichtung mit der Förderschnecke kann horizontal, vertikal oder in jeder beliebigen Neigung angeordnet sein. Sie wird durch das Fördergut im Förderrohr selbsttätig geführt, so dass üblicherweise dank der dichten Säule keine Lager erforderlich sind. Falls das Fördergut eine Selbstführung nicht erlaubt, was eher selten der Fall ist, werden die Lager stets ausserhalb der Fördergutsäule angeordnet. Die Reibung zwischen dem Fördergut und der inneren Wand des Förderrohrs bzw. der Förderschnecke ist abhängig vom Reibungskoeffizienten, von der Reibungsfläche und vom mittleren Normaldruck der Teilchen auf die Reibungsfläche.

Bei der verwendeten Konzeption muss darauf geachtet werden, dass das Fördergut nicht in der Spirale gedreht wird, d.h. die Reibung zwischen dem Fördergut und der inneren Wand des Förderrohrs muss grösser sein als zwischen dem Fördergut und der sich drehenden Schnecke. Bestehen die Förderschnecke und das Förderrohr aus demselben Material mit derselben Oberflächenqualität, so ist das Verhältnis der Steigung der Förderschnecke zu deren Durchmesser derart zu wählen, dass im Bereich dieser Steigung die mit dem Fördergut in Kontakt tretende Oberfläche des Förderrohres grösser ist als diejenige der Förderschnecke. In jedem Fall ist das genannte Verhältnis derart zu wählen, dass die gesamte Reibung zwischen Fördergut und Rohrwand grösser ist als zwischen Schneckenflügel und Fördergut. Ist dies der Fall, so windet sich die Förderschnecke bei der Rückholbewegung durch das Fördergut, ohne dass dieses im Verhältnis zur Wand des Förderrohres in Axialrichtung verschoben wird.

Bevorzugt bestehen die Förderschnecke und das Förderrohr aus Stahl, der abriebfest und, falls erforderlich, chemisch resistent ist.

Der Reibungskoeffizient zwischen der Förderschnecke und dem Fördergut kann vermindert werden, indem die Förderschnecke mit einem gleitfähigen Material beschichtet wird. In diesem Fall kann die Steigung bei gleichem Durchmesser vermindert werden.

Soll mit der Förderung ein chemischer oder physikalischer Vorgang verbunden werden, kann die Förderschnecke und das Förderrohr so ausgestaltet sein, dass sie beheizt oder gekühlt werden können. Dies erfolgt bei der Förderschnecke in bekannter Weise dadurch, dass ein entsprechendes Medium in die Welle eingeleitet bzw. ein Heizstab hineingesteckt und die Wärme von dort in deren Flügel verteilt wird.

Das über den Materialeinlauf undosiert zugeführte Fördergut füllt den Schneckenförderer vollständig. Der Durchmesser der Förderschnecke kann je nach dem zu fördernden Gut unterschiedlich ausgeführt sein. Der Abstand zwischen der Förderschnecke und der inneren Wand des Förderrohres ist wenig grösser, zweckmässig etwa 10 - 30 %, als die mittlere Korn- bzw. Stückgrösse des zu fördernden Materials, damit das Fördergut einerseits weder verklemmt noch zerstört wird, aber andererseits die kompakte Gutsäule gebildet wird, welche die lagerfreie Führung der Förderschnecke erlaubt.

Die durch die hintere Stirnwand des Förderrohrs austretende Welle der Förderschnecke hat auf der Aussenseite in bezug auf den Schneckenförderer vorzugsweise eine Dichtung, welche ein Austreten von Feinanteilen zwischen Welle und Wandung verhindert.

In der Praxis hat es sich als vorteilhaft erwiesen, den Hub der Vor- und Rückwärtsbewegung der Förderschnecke auf den 0,5 - 10-fachen Wert von deren Steigung einzustellen. Zweckmässig wird die Förderschnecke mit einer Frequenz der Grössenordnung 0,5 - 2 sec⁻1 hin- und herbewegt.

Je nach Verwendungszweck kann am Ausgang des Förderrohrs eine Rückschlagklappe oder ein Schieber angeordnet werden. Eine Rückschlagklappe ist besonders geeignet, wenn die erfindungsgemässe Vorrichtung zur Speisung einer mit einem Treibmittel versehenen Förderleitung eingesetzt wird.

Für die Erzeugung der zusammengesetzten Bewegung der Förderschnecke müssen spezielle Getriebearten eingesetzt werden. Diese Sondergetriebe werden aus an sich bekannten Maschinenelementen zusammengebaut, welche die überlagerte Dreh- und Längsbewegung erzeugen können.

Der an sich unproblematische Antrieb der Hin- und Herbewegung der Förderschnecke in Axialrichtung erfolgt durch elektromechanische oder hydraulische bzw. pneumatische Mittel.

Die Vorrichtung ist für den Transport von fliessfähigem Material mit Korn- bzw. Stückgrössen von einem Staubkorn bis ungefähr 50 mm verwendbar. Die Förderkapazität hängt von der Grösse der Vorrichtung ab und kann zwischen wenigen Kilogramm pro Stunde bis zu ungefähr 1 000 Tonnen pro Stunde variieren.

Für den Transport von fliessfähigem Material über weite Strecken ist die Vorrichtung allein jedoch nicht verwendbar, da sie nur einen Wirkungsbereich von höchstens einigen Metern hat.

Es ist bekannt, Feststoffe durch gasförmige Treibmittel, wie beispielsweise Luft, oder Wasser zu transportieren. Beispielsweise kann die sogenannte Dichtstromförderung angewendet werden, wobei von einem Parallelrohr kontinuierlich oder in regelmässigen Abständen das Treibmittel in das Fördergut geblasen wird.

In manchen Fällen ist das Einbringen des Fördergutes in den Förderstrom des Treibmittels eine schwierige Aufgabe. Entscheidend sind eine gleichmässige und möglichst verlustarme Einführung des Fördergutes, bei geringer Bauhöhe und langer Lebensdauer des Eintragsaggregates.

Bei erfindungsgemässer Verwendung der Vorrichtung zum Fördern von fliessfähigem Material als Eintragsaggregat muss das Förderrohr mit der Förderschnecke derart bemessen sein, dass der Druck des Treibmittels beim Materialeinlauf in die Förderschnecke nur noch einen kleinen Bruchteil des Wertes im Förderstrom beträgt.

Vorzugsweise wird angestrebt, dass der Druck durch das Fördergut auf einen Wert abgebaut wird, der unterhalb von 5 %, bei feinkörnigem Fördergut unter 1 % liegt.

Der beim Materialeinlauf vorhandene Restdruck ist von verschiedenen, im wesentlichen nachfolgend diskutierten Parametern abhängig, welche die minimale Länge des Förderrohrs massgebend beeinflussen:

- Korngrösse. Bei grobkörnigem oder grobstückigem Material, beispielsweise Holzschnitzeln oder Kohle, ist der Druckabfall pro Meter Rohrlänge wesentlich geringer als bei feinkörnigem Material, z. B. Aluminiumoxid.
- Kornzusammensetzung. Ein Fördergut mit verschiedenen Korngrössen bewirkt einen höheren Druckabfall pro Meter Rohrlänge als ein Gut mit einheitlichen Korngrössen.
- Druck des Treibmittels. Ein hoher Druck wird - absolut gesehen - pro Meter Rohrlänge weniger stark abgebaut als ein niedriger Druck.
- Zähigkeit und Viskosität des Treibmittels. Diese sind insbesondere bei flüssigen Treibmitteln unterschiedlich.

Bei Anwendung eines Gegendrucks muss die erfindungsgemässe Verwendung der Vorrichtung als Eintragsaggregat immer folgende Bedingungen erfüllen:

- Das Förderrohr muss im Bereich der Förderschnecke vollständig und dicht mit dem Fördergut gefüllt sein.
- Die Reibung an der inneren Wand des Förderrohres muss bei der Rückholbewegung auch grösser sein als die Reibung an den nun mindestens teilweise vom Fördergut belasteten Schneckenflügeln.

Die erfindungsgemässe Verwendung der Vorrichtung als Eintragsaggregat von Fördergut in einen Förderstrom ist besonders geeignet, wenn Bunker oder Silos von schwer fliessenden Gütern entleert werden müssen.

Zusammen mit den strömenden Medien wirkt die erfindungsgemäss verwendete Vorrichtung als Feststoffpumpe. Das Fördergut kann über eine horizontale, schräge oder senkrechte Strecke energiegünstiger transportiert werden. Die Förderstrecke kann ohne weiteres bis zu 2 000 m betragen.

Das Spektrum der möglichen Fördergüter ist ausserordentlich breit. Als Beispiele können genannt werden:

-Aluminiumindustrie: Entnahme von Tonerde, Flussmaterialien und kohlenstoffhaltigen Produkten aus Bunkern und Silos und Beförderung dieser Produkte zu Zwischenlager-Behältern; sowie Reinigung von Aluminiumschrott und Überführung zum Schmelzofen oder in das flüssige Metall.

- Kohlenkraftwerk: Transport von Kohle, Schlacke und Asche.

- Chemische Industrie: Transport, Kühlen und Erwärmen von zahlreichen Produkten, Verwendung in Adsorptionsprozessen.

- Nahrungsmittelindustrie: Transport aller Art von Körnern, Mehl und Saatgut aus Bunkern und Silos.

- Holz- und Papierindustrie: Transport von Holzschnitzeln, Sägespänen, Holzmehl, Füllstoffen von Papier und Chemikalien zum Bleichen.

- Düngemittelindustrie: Transport von Rohphosphaten, Pottasche und fertigen Düngern.

Die Vorrichtung kann auch als Dosiervorrichtung, Festkörperreaktionsraum, Gegenstrom-Chromatograph und/oder Adsorptionsvolumen verwendet werden.

Die erfindungsgemässe Verwendung der Vorrichtung wird anhand der Zeichnung näher erläutert. Die schematischen vertikalen Teilschnitte zeigen in

- Fig. 1 eine Fördervorrichtung mit einem hydraulischen Antrieb, die als selbstdichtendes Eintragsaggregat in einen Förderstrom verwendet wird, und

- Fig. 2 eine Fördervorrichtung mit einem pneumatischen Antrieb, die als selbstdichtendes Eintragsaggregat in einen Förderstrom verwendet wird.

- Fig. 3 eine Fördervorrichtung entsprechend Fig. 1 oder 2, jedoch mit vertikal angeordneter Förderschnekke, welche selbsttätig Fördergut aus einem Haufwerk entnimmt.

Die dargestellte Vorrichtung als Eintragungsaggregat von fliessfähigem Material besteht im wesentlichen aus einem Förderbereich 10 und einem Antriebsbereich 12.

Im Förderbereich 10 ist in einem Förderrohr 14 eine in axialer Richtung A vor- und rückwärts bewegbare Förderschnecke 16 angeordnet. Die Flügel der Förderschnecke 16 sind mit einer Schneckenwelle 18 verschweisst und haben von der inneren Wand des Förderrohres 14 einen Abstand, der grösser ist als die mittlere Korngrösse des Förderguts 20. Der Hub der Vorwärtsbewegung der Förderschnecke 16 liegt nach dieser Ausführungsform etwas unter der Steigung s der Schraubenlinie.

Das Fördergut 20 wird undosiert in den Materialeinlauf 22 gegeben, was mit einem Pfeil angedeutet ist. Bei einem Förderhub wird die Förderschnecke 16, die in bezug auf das Fördergut 20 selbsthemmend ist, nach vorne gestossen, ohne dass sie sich dreht. Dabei wird eine entsprechende Menge Fördergut 20 in den Materialauslauf gestossen und der weiteren Verwendung zugeführt, was ebenfalls durch einen Pfeil angedeutet ist. Der Materialauslauf ist als sich konisch verengendes, an das Förderrohr 14 angeflanschtes Zwischenstück 48, an welches die Förderleitung 49 angeflanscht ist. In das Zwischenstück 48 mündet ein Treibmittelzuflussrohr 50, durch welches im vorliegenden Fall von einem Kompressor 52 auf hohen Druck gebrachte Luft eingeblasen wird. Das durch den Förderhub der Förderschnecke 16 in das Zwischenstück 48 gebrachte Fördergut 20 wird vom Luftstrom mitgerissen.

Der Druck des Treibmittels übt auf den Förderbereich 10 im Innern des Förderrohrs einen massiven Gegendruck aus. Das im Bereich der Förderschnecke 16 vollständig mit Fördergut 20 gefüllte Förderrohr 14 bewirkt, dass der Förderbereich selbstdichtend ist. Im Bereich des Materialeinlaufs 22 ist der Druck des Treibmittels auf wenige Prozent abgefallen.

Das Förderrohr 14 ist auf der in bezug auf die Förderrichtung hinteren Seite mit einer Stirnwand 26 verschlossen, welche von der Schneckenwelle 18 durchgriffen wird. Mit dieser Stirnwand 26 ist eine Dichtung 28 verbunden, auf welcher die Schneckenwelle 18 gleiten kann.

Das Antriebsaggregat und das Förderrohr 14 sind auf einer gemeinsamen Konsole 46 verankert.

Die Vor- und Rückwärtsbewegung der Antriebswelle 32 wird dadurch bewirkt, dass die Schneckenwelle 18 über eine Kupplung 30 starr mit einer in derselben axialen Richtung A angeordneten Antriebswelle 32 verbunden ist, welche im hintersten Bereich als Stange 34 mit mehrgängigem Gewinde ausgebildet ist. Die Leitspindel dieser Gewindestange hat die gleiche Steigung s wie die Förderschnecke 16 und steht mit der Mutter einer Rücklaufsperre 36 in Eingriff. Die Rücklaufsperre 36 bewirkt, dass die Mutter im den Förderhub bildenden Vorlauf frei drehen kann, während sie bei der Rückholbewegung der Welle blockiert ist und so eine Drehung der Gewindestange und damit der Antriebs- und Schneckenwelle erzwingt. Voraussetzung dazu ist, dass der Durchmesser der Gewindestange 34 derart bemessen ist, dass keine Selbsthemmung entsteht. Dank der gleichen Steigung s von Gewindestange 34 und Förderschnecke 16 windet sich diese bei der Rückholbewegung aus dem Fördergut 20 heraus, ohne dieses in Axialrichtung A zu bewegen.

Im Antriebsbereich erfolgt die Druckanwendung in Axialrichtung zur Vor- und Rückwärtsbewegung der Förderschnecke 16 über einen im Antriebszylinder 54 durch hydraulischen Druck hin- und herbewegten Kolben 56. Die Antriebswelle kann sich im Kolben 56 frei drehen. Im Anschluss an den Kolben geht die Antriebswelle 32 in die Gewindestange 34 über. Bei der Rückholbewegung drehen sich Gewindestange 34 und Antriebswelle 32, der Kolben 56 dagegen nicht.

Über Zu- bzw. Abführleitungen 58 wird das Hydrauliköl, gesteuert durch ein von zwei Endschaltern in bekannter Weise ausgelöstes Umsteuerventil 60 und getrieben von einer Pumpe 62, alternierend in eine Stirnseite des Antriebszylinders eingeleitet.

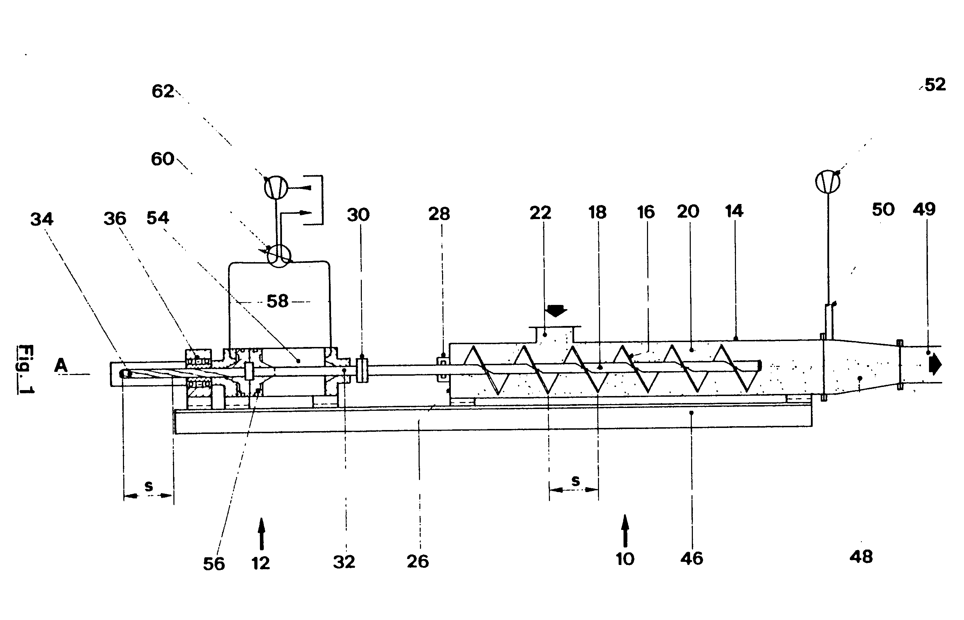

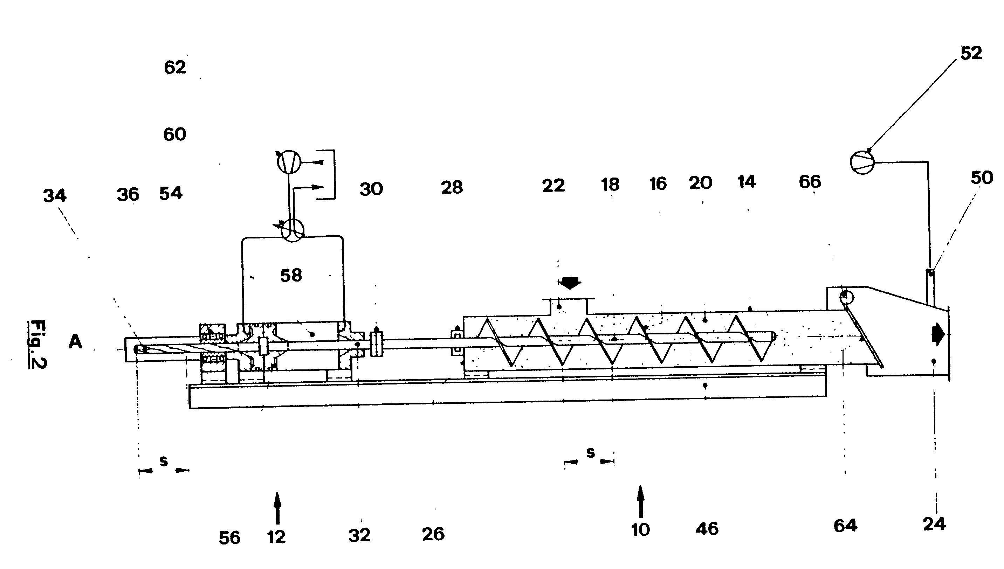

Fig. 2 unterscheidet sich von Fig. 1 lediglich in zwei Merkmalen. Das erste, aus der Zeichnung gut ersichtliche unterschiedliche Merkmal liegt im Bereich des Materialauslaufs 24. Das Förderrohr 14 wird von einer schräg aufliegenden Klappe 64 verschlossen, welche um eine Achse 66 schwenkbar ist. Bei einem Vorschub der Förderschnecke 16 wird die Klappe 64 durch das ausfliessende Fördergut 20 angehoben, aber von der Druckluft innerhalb kurzer Zeit wieder zugedrückt. Damit wird die selbstdichtende Funktion der Fördervorrichtung verbessert. Dies ist insbesondere bei grobkörnigem oder grobstückigem Material von Vorteil.

Weiter wird nach Fig. 2, aus der Zeichnung nicht ersichtlich, der Druck in Axialrichtung A mit Druckluft erzeugt.

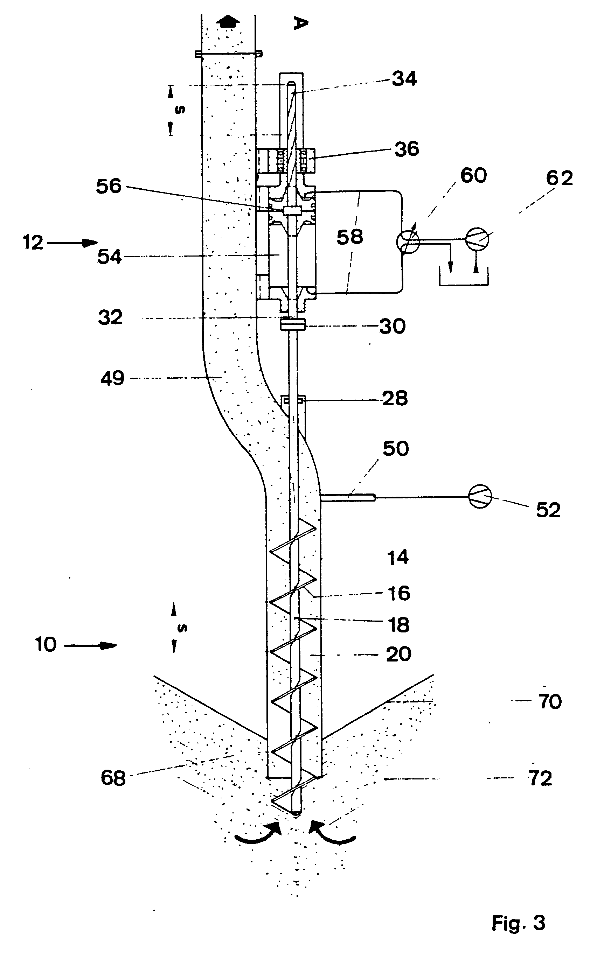

Nach der Ausführungsform von Fig. 3 ist sowohl der Förderals auch der Antriebsbereich, welcher an einem nicht dargestellten Kran aufgehängt ist, vertikal oder nahezu vertikal angeordnet. Die mindestens vor dem Förderhub aus dem Förderrohr 14 herausragende Förderschnecke 16 entnimmt selbsttätig Fördergut 20 aus einem Haufwerk 68, beispielsweise aus einer Schiffsluke. Dabei bildet sich der Schüttkegel 70. Die Fliesslinien 72 sind ebenfalls angedeutet. Das Fördergut 20 wird vertikal oder nahezu vertikal aufwärts transportiert und mittels komprimierter Luft, welche durch das Zuflussrohr 50 eintritt, in einer als Schlauchleitung ausgebildeten Förderleitung 49 weiter gefördert.

In allen Ausführungsbeispielen nach den Fig. 1 bis 3 können ausserhalb der Fördergutsäule konventionelle Lager angeordnet sein.

**Patentansprüche**

1. Verwendung einer Vorrichtung mit einem Förderrohr (14) mit einer koaxial angeordneten Förderschnecke (16) und Mittel zu deren Antrieb als selbstdichtendes Eintragungsaggregat von fliessfähigem Fördergut (20) in pulverförmiger, körniger, zerstückelter, granalienförmiger oder pastöser Form in einen Förderstrom mit gasförmigen oder flüssigen Treibmitteln, wobei in axialer Richtung (A) die in bezug auf das Fördergut selbsthemmende Förderschnecke (16), deren Schneckenwelle (18) starr mit einer Antriebswelle (32) gekuppelt sowie vor- und rückwärts bewegbar ist, und der Antrieb zur Erzeugung eines rotationsfreien Förderhubs und einer Rückholbewegung mit einer erzwungenen, regelmässigen Umdrehung der Förderschnecke (16) pro Steigung (s) von deren Schraubenlinie in Richtung des Schraubenganges angeordnet ist, wodurch das Fördergut (20) bei der Rückholbewegung auch in Axialrichtung (A) stationär bleibt, wobei die Länge des Förderrohrs (14) mit der Förderschnecke (16) für sich allein oder im Zusammenwirken mit einer am Förderrohr (14) befindlichen Klappe (64), derart bemessen ist, dass der Druck des Treibmittels beim Materialeinlauf (22) in die Förderschnecke (16) nur noch einen kleinen Bruchteil des Wertes im Förderstrom beträgt.

2. Verwendung einer Vorrichtung als selbstdichtendes Eintragungsaggregat gemäss Anspruch 1, wobei die Förderschnecke (16) keine bzw. ausschliesslich ausserhalb der Fördergutsäule (20) angeordnete Lager aufweist, die Flügel der Förderschnecke (16) durchgehend ausgebildet sind und der Abstand der Förderschnecke (16) von der Innenwand des Förderrohrs (14) allseitig knapp oberhalb der mittleren Korn- bzw. Stückgrösse des Förderguts (20) liegt, wodurch bei einem pneumatischen oder hydraulischen Gegendruck eine kompakte, homogene Gutsäule entsteht.

3. Verwendung einer Vorrichtung als selbstdichtendes Eintragungsaggregat gemäss Anspruch 1 oder 2, wobei das Förderrohr (14) und die Förderschnecke (16) aus demselben Material, vorzugsweise aus rostfreiem Stahl, bestehen.

4. Verwendung einer Vorrichtung als selbstdichtendes Eintragungsaggregat gemäss einem der Ansprüche 1 bis 3, wobei die Förderschnecke (16) mit einem gleitfähigen Material beschichtet ist.

5. Verwendung einer Vorrichtung als selbstdichtendes Eintragungsaggregat gemäss der Ansprüche 1 bis 4, wobei die Förderschnecke (16) heiz- und/oder kühlbar ist.

6. Verwendung einer Vorrichtung als selbstdichtendes Eintragungsaggregat gemäss der Ansprüche 1 bis 5, wobei der Durchtritt der Schneckenwelle (18) der Förderschnecke (16) durch die hintere Stirnwand (26) des Förderrohrs (14) auf der Aussenseite eine Dichtung (28) hat.

7. Verwendung einer Vorrichtung als selbstdichtendes Eintragungsaggregat gemäss der Ansprüche 1 bis 6, wobei am Förderrohr (14) in Richtung des Materialauslaufs (24) eine Rückschlagklappe (64) oder ein Schieber angeordnet ist.

8. Verwendung einer Vorrichtung als selbstdichtendes Eintragungsaggregat gemäss einem der Ansprüche 1 bis 7 zur Entnahme von Fördergut (20) aus Bunkern, Silos oder einem Haufwerk, insbesondere von schwerfliessenden Gütern.

## Claims

1. Utilization of a device having a conveyor tube (14) with a coaxially arranged conveyor screw (16), and means to drive the latter, as a self-sealing charging unit for flowing conveyed material (20) in powdery, granular, fragmented, pellet or pasty form in a conveying flow making use of gaseous or liquid propellants, wherein, in the axial direction (A), the conveyor screw (16), which in relation to the material to be conveyed is self-inhibiting, and whose screw shaft (18) is rigidly coupled to a drive shaft (32) and can be moved backwards and forwards, and the drive is (sic) arranged to produce a rotation-free conveying stroke and a movement of recovery having a forced, regular rotation of the conveyor screw (16), the lead (s) of the latter's screw lying in the direction of the screw turn, the material to be conveyed (20) thereby also remaining stationary in the axial direction (A) during the movement of recovery, and wherein the length of the conveyor tube (14) is dimensioned with the conveyor screw (16) alone, or in conjunction with a flap (64) located at the conveyor tube (14), in such a way that the pressure of the propellant at the material inlet (22) in the conveyor screw (16) amounts to only a small fraction of the magnitude in the conveying flow.

2. Utilization of a device as a self-sealing charging unit according to Claim 1, wherein the conveyor screw (16) has no bearings, or exclusively such as are arranged outside the column of material to be conveyed (20), the wings of the conveyor screw (16) have a continuous form, and the distance of the conveyor screw (16) from the internal wall of the conveyor tube (14) is everywhere slightly greater than the mean grain or particle size of the material to be conveyed (20), the result being a compact, homogeneous column of material, given a pneumatic or hydraulic back pressure.

3. Utilization of a device as a self-sealing charging unit according to Claim 1 or 2, wherein the conveyor tube (14) and the conveyor screw (16) are of the same material, preferably stainless steel.

4. Utilization of a device as a self-sealing charging unit according to one of the Claims 1 to 3, wherein the conveyor screw (16) is coated with a slipping material.

5. Utilization of a device as a self-sealing charging unit according to Claims 1 to 4, wherein the conveyor screw (16) can be heated and/or cooled.

6. Utilization of a device as a self-sealing charging unit according to Claims 1 to 5, wherein there is a seal (28) on the outside at the point where the screw shaft (18) of the conveyor screw (16) passes through the back face (26) of the conveyor tube (14).

7. Utilization of a device as a self-sealing charging unit according to Claims 1 to 6, wherein a swing check valve (64) or a gate valve is arranged at the conveyor tube (14) in the direction of the material outlet (24).

8. Utilization of a device as a self-sealing charging unit according to one of the Claims 1 to 7 in order to extract from bunkers, silos or a heap of debris, material to be conveyed (20), in particular materials that do not flow easily.

## Revendications

1. Utilisation d'un dispositif comportant un tube de transport (14), une vis de transport (16) disposée coaxialement et des moyens pour son entrainement, sous forme de groupe d'alimentation, auto-étanche, de produit coulant (20), sous forme pulvérulente, granuleuse, en morceaux, en grenaille ou sous forme pâteuse, dans un flux de transport réalisé avec des fluides moteurs gazeux ou liquides, étant précisé que la vis de transport (16), qui arrête d'elle-même le déplacement du produit, est disposée dans la direction axiale (A), étant précisé que son fût (18) est rigidement couplé à un arbre d'entrainement (32) et peut se déplacer vers l'avant et vers l'arrière; et étant précisé que l'entrainement est disposé pour produire une course de transport, sans rotation, et un déplacement de retour accompagné d'une révolution régulière forcée de la vis de transport (16) par pas (s) de son hélice dans la direction du filet, ce par quoi le produit transporté (20) reste fixe, même dans la direction axiale (A), lors du déplacement de retour, étant précisé que la longueur du tube de transport (14) avec la vis de transport (16) est dimensionné, en soi ou en collaboration avec un volet (64) qui se trouve sur le tube de transport (14), de façon que, près de l'entrée (22) du produit dans la vis de transport (16), la pression du fluide moteur ne représente plus qu'une petite fraction de sa valeur dans le flux de transport.

2. Utilisation d'un dispositif sous forme de groupe d'alimentation auto-étanche selon la revendication 1, dans lequel la vis de transport (16) ne présente pas de palier, ou uniquement des paliers disposés à l'extérieur de la colonne (20) de produit transporté, dans lequel les filets de la vis de transport (16) sont conçus continus; et dans lequel la distance entre la vis de transport (16) et la paroi intérieure du tube de transport (14) est, de tous les côtés, juste supérieure à la granulométrie moyenne du produit transporté (20), ce par quoi, en présence d'une contre pression pneumatique ou hydraulique, il apparait une colonne de produit compacte et homogène.

3. Utilisation d'un dispositif sous forme de groupe d'alimentation auto-étanche selon la revendication 1 ou 2, dans lequel le tube de transport (14) et la vis de transport (16) sont fabriqués en le même matériau, de préférence en acier inoxydable.

4. Utilisation d'un dispositif sous forme de groupe d'alimentation auto-étanche selon l'une des revendications 1 à 3, dans lequel la vis de transport (16) est revêtue d'un matériau favorisant le glissement.

5. Utilisation d'un dispositif sous forme de groupe d'alimentation auto-étanche selon les revendications 1 à 4, dans lequel la vis de transport (16) peut être chauffée et/ou refroidie.

6. Utilisation d'un dispositif sous forme de groupe d'alimentation auto-étanche selon les revendications 1 à 5, dans lequel la traversée du fût (18) de la vis de transport (16) à travers la paroi frontale arrière (26) du tube de transport (14) comporte, côté extérieur, une garniture d'étanchéité (28).

7. Utilisation d'un dispositif sous forme de groupe d'alimentation auto-étanche selon les revendications 1 à 6, dans lequel un volet antiretour (64) ou une trappe coulissante antiretour est disposé sur le tube de transport (14) en direction de la sortie du produit (24).

8. Utilisation d'un dispositif sous forme de groupe d'alimentation auto-étanche selon l'une des revendications 1 à 7, pour extraire hors d'une soute, d'un silo ou d'un tas, un produit à transporter (20), en particulier des produits qui coulent difficilement.

Fig. 1

**Fig. 2**

Fig. 3